# EUROPEAN PATENT APPLICATION

(11) **EP 4 790 110 A1**
(43) Date of publication of application: **12.08.2026**
(21) Application number: 26157528.6
(22) Date of filing: 10.02.2026
(51) Int. Cl.: C09D 11/32, C09D 11/38

(54) **AQUEOUS INK, AND INKJET RECORDING DEVICE**

(30) Priority: 10.02.2025 JP 2025020065
(71) Applicant: BROTHER KOGYO KABUSHIKI KAISHA, Aichi-ken 467-8561 (JP)
(72) Inventor: ISOGAI, Masato, Nagoya, 467-8562 (JP); TSUZAKA, Yuka, Nagoya, 467-8562 (JP); NISHIDA, Satoshi, Nagoya, 467-8562 (JP)
(74) Representative: Kuhnen & Wacker Patent- und Rechtsanwaltsbüro PartG mbB

(57) **Abstract**

An aqueous ink for inkjet recording includes a plant-derived colorant, a plant-derived water-soluble organic solvent, a plant-derived surfactant, and water. The plant-derived surfactant may be a biosurfactant.

## Description

### TECHNICAL FIELD

The present invention relates to aqueous ink for inkjet recording and inkjet recording devices.

### BACKGROUND ART

JP Patent Application Publication No. 2023-128719 discloses an aqueous inkjet ink composition capable of reducing environmental impact by using biological source materials.

### DESCRIPTION

The present specification discloses a technology that can reduce environmental impact and improve print quality.

This specification discloses an aqueous ink for inkjet recording. The aqueous ink for inkjet recording includes a plant-derived colorant, a plant-derived water-soluble organic solvent, a plant-derived surfactant, and water. The plant-derived surfactant is a biosurfactant.

This aqueous ink for inkjet recording is composed of plant-derived materials. Therefore, compared to inks that use petroleum-derived materials, environmental impact can be reduced. Furthermore, in this aqueous ink for inkjet recording, a biosurfactant is used as the plant-derived surfactant. The biosurfactant exhibits higher surfactant activity compared to direct extracts from biological sources. Therefore, high print quality can be ensured.

An inkjet recording device is also novel and useful. The inkjet recording device includes an ink reservoir, an ink discharge unit, and an aqueous ink for inkjet recording stored in the ink reservoir, and discharge the aqueous ink for inkjet recording from the ink discharge unit. The aqueous ink includes a plant-derived colorant, a plant-derived water-soluble organic solvent, a plant-derived surfactant, and water. The plant-derived surfactant is a biosurfactant.
FIG. 1 illustrates the configuration of the inkjet recording device.
FIG. 2 is a table 1 that indicates aqueous ink compositions and evaluation results for Examples.
FIG. 3 is a table 2 that indicates aqueous ink compositions and evaluation results for Examples and Comparative Examples.

### (Configuration of Recording Device 10)

With reference to the drawings, the embodiment of recording device 10 will be described. The recording device 10 is a device that records images on a recording medium P by ejecting aqueous ink toward the recording medium P in accordance with the inkjet recording method. The recording device 10 is used by being placed on a tabletop. However, in other embodiments, the recording device 10 may be used by being placed on a floor or on a rack.

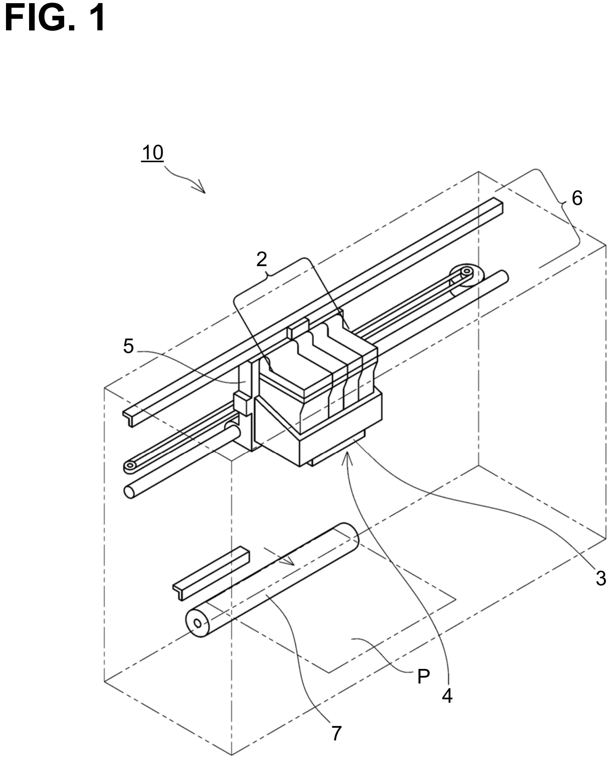

As shown in FIG. 1, the recording device 10 includes, as its main components, four ink cartridges 2, an inkjet head 3, a head unit 4, a carriage 5, a drive unit 6, and a platen roller 7.

The four ink cartridges 2 each contain one of the four colors of aqueous ink: yellow, magenta, cyan, and black. In this embodiment, a set of four ink cartridges 2 is shown, but in a variation, an integrated ink cartridge with internal partitions forming compartments for aqueous yellow ink, aqueous magenta ink, aqueous cyan ink, and aqueous black ink may be used. The ink cartridge body may be any conventionally known type.

The inkjet head 3 is installed on the head unit 4. The inkjet head 3 performs image recording on the recording medium P. The four ink cartridges 2 and the head unit 4 are mounted on the carriage 5. The drive unit 6 reciprocates the carriage 5 in a linear direction. As the drive unit 6, for example, any conventionally known type may be used. The platen roller 7 extends in the reciprocating direction of the carriage 5 and is disposed facing the inkjet head 3.

The inkjet head 3 has a configuration such that a plurality of metal thin plates are stacked in multiple layers. Each of the thin plates is formed with through-holes. By stacking multiple layers of thin plates with through-holes, flow paths for the circulation of aqueous ink are formed. Each of the thin plates is, for example, bonded by an adhesive.

In the recording device 10 of the present embodiment, the four ink cartridges 2 are mounted, together with the head unit 4, on a single carriage 5. However, each of the four ink cartridges 2 may be mounted on a carriage separate from the head unit 4. Furthermore, each of the four ink cartridges 2 may be arranged and fixed within the recording device 10, without being mounted on the carriage 5. In such a case, for example, each of the four ink cartridges 2 and the head unit 4 mounted on the carriage 5 are connected by a tube or the like, whereby aqueous ink is supplied from each ink cartridge to the head unit 4 via the tube. Alternatively, in the present embodiment, four ink bottles having a bottle shape may be used in place of the four ink cartridges 2. In this case, each ink bottle may include an inlet for injecting ink from the outside into the interior.

Inkjet recording using the recording device 10 is performed as follows. First, the recording medium P is fed from a paper feed cassette in the recording device 10. The recording medium P is conveyed between the inkjet head 3 and the platen roller 7. A predetermined image is recorded on the conveyed recording medium P by ejecting aqueous ink from the inkjet head 3. The recording medium P on which the image has been recorded is discharged from the recording device 10. It should be noted that, in FIG. 1, the feeding mechanism and the discharging mechanism for the recording medium P are not illustrated.

Although the recording device 10 shown in FIG. 1 uses a serial-type inkjet head, the recording device 10 may also be a device that uses a line-type inkjet head, a roll-to-roll system, or the like.

### (Aqueous ink for inkjet recording)

The aqueous ink for inkjet recording disclosed in this specification is at least one of the four colors: yellow, magenta, cyan, and black. The aqueous ink comprises a colorant, a water-soluble organic solvent, a surfactant, and water. The colorant, water-soluble organic solvent, and surfactant are dissolved or dispersed in water.

### (Colorant)

The colorant is a plant-derived colorant. It should be noted that plant-derived components include not only components that can be directly obtained from plants, but also derivatives of components that can be directly obtained from plants. The plant-derived colorant is not particularly limited, and examples thereof may include chromatic colorants and achromatic colorants.

In this specification, the term "chromatic color" refers to a color that exhibits a chroma (C value) of 1.0 or more when a test pattern is formed by applying ink to a white recording medium such as high-quality paper at a predetermined application amount, and the color measurement is performed using a colorimeter based on the CIELAB color space. The predetermined application amount is the minimum amount of ink required to cover the entire surface of the recording medium. Further, in this specification, the term "achromatic color" refers to a color such as white, black, or a color obtained by mixing white and black, having a chroma of less than 1.0.

Examples of chromatic colorants may include flavonoid coloring agents, quinoid coloring agents, carotenoid coloring agents, anthocyanin coloring agents, betaine coloring agents, monascus coloring agents, and other coloring agents derived from plants.

Examples of flavonoid coloring agents may include safflower red coloring agent, safflower yellow coloring agent, turmeric coloring agent, and the like. Examples of quinoid coloring agents may include cochineal coloring agent, lac coloring agent, madder coloring agent, and lithospermum coloring agent, and the like. Examples of carotenoid coloring agents may include gardenia yellow coloring agent, gardenia blue coloring agent, gardenia red coloring agent, capsicum coloring agent, annatto coloring agent, and the like. Examples of anthocyanin coloring agents may include red radish coloring agent, red cabbage coloring agent, red rice coloring agent, elderberry coloring agent, cowberry coloring agent, gooseberry coloring agent, cranberry coloring agent, salmonberry coloring agent, perilla coloring agent, swim blueberry coloring agent, strawberry coloring agent, dark sweet cherry coloring agent, cherry coloring agent, hibiscus coloring agent, huckleberry coloring agent, grape juice coloring agent, grape skin coloring agent, black currant coloring agent, blackberry coloring agent, blueberry coloring agent, plum coloring agent, whortleberry coloring agent, boysenberry coloring agent, mulberry coloring agent, purple sweet potato coloring agent, purple corn coloring agent, purple yam coloring agent, raspberry coloring agent, red currant coloring agent, loganberry coloring agent, and the like. Examples of betaine coloring agents may include beet red coloring agent and the like. Examples of monascus coloring agents may include red monascus coloring agent and yellow monascus coloring agent, and the like. Examples of other plant-derived coloring agents may include indigo, clerodendrum coloring agent, spirulina blue coloring agent, and the like.

Examples of achromatic coloring agents may include plant-derived carbon black coloring agent, squid ink coloring agent, and the like. Examples of plant-derived carbon black coloring agents include binchotan (white charcoal), bamboo charcoal, activated charcoal, white charcoal, black charcoal, molded charcoal, sawdust charcoal, plum charcoal, mangrove charcoal, coconut shell charcoal, and the like.

An amount of the colorant relative to the total amount of the aqueous ink is not particularly limited. The lower limit of said amount may be, for example, 0.10 mass% or more, 0.50 mass% or more, 1.00 mass% or more, or 2.00 mass% or more. The upper limit of said amount may be, for example, 20.00 mass% or less, 15.00 mass% or less, 10.00 mass% or less, or 5.00 mass% or less. The range of said amount can be set by appropriately combining the above-mentioned upper and lower limits, and examples thereof may include 0.10 mass% or more and 20.00 mass% or less, 0.50 mass% or more and 15.00 mass% or less, 1.00 mass% or more and 10.00 mass% or less, or 2.00 mass% or more and 5.00 mass% or less. When the amount of the colorant is within the above range, high stability of the aqueous ink can be achieved.

### (Water-soluble Organic Solvent)

The water-soluble organic solvent is not particularly limited as long as it is plant-derived and possesses water solubility, and any such solvent may be employed. Examples of water-soluble organic solvents may include glycerin, ethylene glycol, propylene glycol, butylene glycol, hexylene glycol, diethylene glycol, triethylene glycol, polyethylene glycol, dipropylene glycol, tripropylene glycol, polypropylene glycol, 1,3-propanediol, 1,2-butanediol, 1,2-hexanediol, 1,6-hexanediol, 1,2,6-hexanetriol, thioglycol, and glycol ethers having a propylene oxide group. Other examples of water-soluble organic solvents may include alkyl alcohols having 1 to 4 carbon atoms such as methyl alcohol, ethyl alcohol, n-propyl alcohol, isopropyl alcohol, n-butyl alcohol, sec-butyl alcohol, isobutyl alcohol, and tert-butyl alcohol. Further examples may include lower alkyl ethers of alkylene glycols such as ethylene glycol monomethyl (or ethyl, propyl, butyl) ether, diethylene glycol monomethyl (or ethyl, propyl, butyl) ether, triethylene glycol monomethyl (or ethyl, propyl, butyl, hexyl) ether, tetraethylene glycol monomethyl (or ethyl, propyl, butyl, hexyl) ether, propylene glycol monomethyl (or ethyl, propyl, butyl) ether, dipropylene glycol monomethyl (or ethyl, propyl, butyl) ether, propylene glycol monopropyl ether, dipropylene glycol monopropyl ether, tripropylene glycol monomethyl (or ethyl, propyl, butyl) ether, and tetrapropylene glycol monomethyl (or ethyl) ether. Additional examples may include N-methyl-2-pyrrolidone, 2-pyrrolidone, and 1,3-dimethyl-2-imidazolidinone. The water-soluble organic solvent may be used alone or in combination of two or more types. Among these, polyols may be preferred, and glycerin may be particularly preferred.

An amount of the water-soluble organic solvent relative to the total amount of the aqueous ink is not particularly limited. The lower limit of said amount may be, for example, 1.00 mass% or more, 3.00 mass% or more, 5.00 mass% or more, or 10.00 mass% or more. The upper limit of said amount may be, for example, 50.00 mass% or less, 40.00 mass% or less, 35.00 mass% or less, or 30.00 mass% or less. The range of said amount may be set by appropriately combining the aforementioned upper and lower limits; for example, 1.00 mass% or more and 50.00 mass% or less, 3.00 mass% or more and 40.00 mass% or less, 5.00 mass% or more and 35.00 mass% or less, or 10.00 mass% or more and 30.00 mass% or less.

### (Surfactant)

The surfactant is incorporated to adjust ink properties such as surface tension. The surfactant is plant-derived, and is particularly a biosurfactant. The biosurfactant is a substance produced by fermentation of biomass raw materials by microorganisms such as yeast or bacteria. Biosurfactants do not include substances directly extracted from plants and the like, nor substances artificially synthesized or manufactured using biomass raw materials. Biosurfactants possess multiple functional groups and asymmetric carbons within the molecule and have a bulky structure, and therefore exhibit superior surface-active properties compared to direct extracts from biological sources and synthetic surfactants.

Examples of biosurfactants may include, for instance, sugar-type biosurfactants and fatty acid-type biosurfactants. Examples of sugar-type biosurfactants may include rhamnolipid, sophorolipid, mannosylerythritol lipid, trehalose lipid, cellobiose lipid, and liamocin. Examples of fatty acid-type biosurfactants may include, for example, spiculisporic acid and corinomycic acid. The surfactant may be used alone or in combination of two or more types. Among the above-mentioned surfactants, spiculisporic acid and rhamnolipid may be preferred.

An amount of the surfactant relative to the total amount of the aqueous ink is not particularly limited. The lower limit of said amount may be, for example, 0.01 mass% or more, 0.02 mass% or more, 0.05 mass% or more, 0.10 mass% or more, 0.20 mass% or more, or 0.50 mass% or more. The upper limit of said amount may be, for example, 5.00 mass% or less, 4.00 mass% or less, 3.00 mass% or less, 2.50 mass% or less, 2.00 mass% or less, 1.50 mass% or less, or 1.00 mass% or less. The range of said amount may be set by appropriately combining the aforementioned upper and lower limits; for example, 0.01 mass% or more and 5.00 mass% or less, 0.02 mass% or more and 4.00 mass% or less, 0.02 mass% or more and 3.00 mass% or less, 0.02 mass% or more and 2.50 mass% or less, 0.02 mass% or more and 1.50 mass% or less, 0.02 mass% or more and 1.00 mass% or less, 0.05 mass% or more and 3.00 mass% or less, 0.05 mass% or more and 2.50 mass% or less, 0.10 mass% or more and 2.50 mass% or less, or 0.20 mass% or more and 1.00 mass% or less. When the amount of the surfactant is 0.01 mass% or more, the surfactant action is sufficiently exhibited, thereby improving ink loading and print quality. Furthermore, when the amount of the surfactant is 5.00 mass% or less, the surfactant can be suitably dissolved or dispersed in the aqueous ink.

### (Water)

It may be preferable that the water is ion-exchanged water or purified water. An amount of water relative to the total amount of the aqueous ink is appropriately determined according to the desired ink properties and the like. The amount of water may be, for example, within the range of 15.00 mass% or more and 95.00 mass% or less, or within the range of 25.00 mass% or more and 85.00 mass% or less. The amount of water may also be the remainder of the other components.

The aqueous ink may further contain conventionally known additives as necessary. Examples of additives may include pH adjusters, viscosity modifiers, antifungal agents, and the like. Examples of viscosity modifiers may include polyvinyl alcohol, cellulose, and water-soluble resins.

The aqueous ink can be prepared, for example, by uniformly mixing a colorant, a water-soluble organic solvent, a surfactant, water, and other additives as necessary, using conventional methods, and removing insoluble substances by filtration or the like.

### (Examples and Comparative Examples)

Next, the aqueous ink disclosed in this specification will be specifically described with reference to Examples and Comparative Examples. However, the technology disclosed in this specification is not limited to these Examples in any way.

### (Preparation of Aqueous Ink)

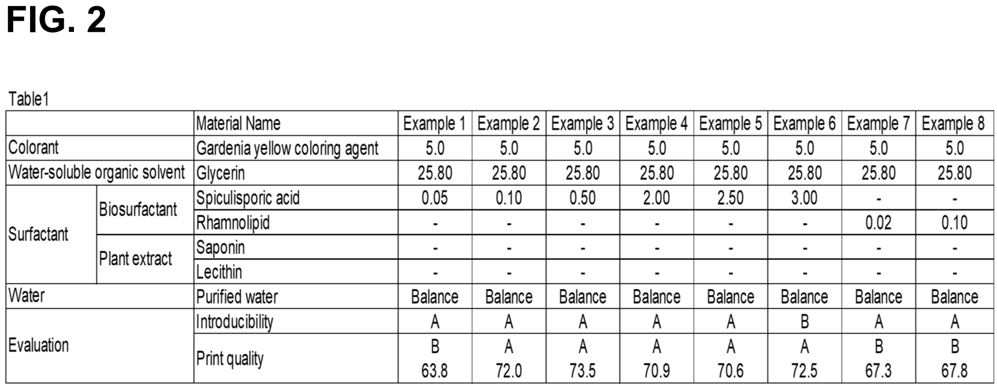

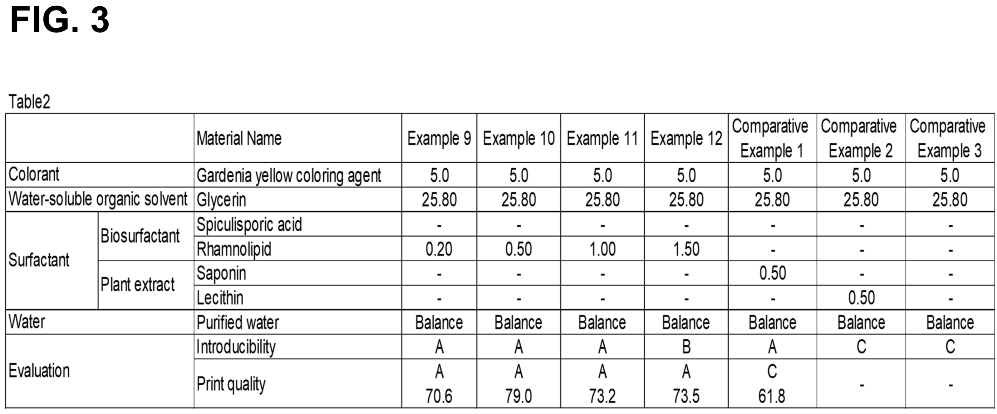

Table 1 in FIG. 2 shows aqueous ink compositions and evaluation results for Examples 1 to 8. Table 2 in FIG. 3 shows aqueous ink compositions and evaluation results for Examples 9 to 12 and Comparative Examples 1 to 3. It should be noted that the numerical values in the columns indicating each component in the tables represent the amount of the respective component relative to the total amount of each aqueous ink, and the unit is mass%.

Using each aqueous ink prepared in the respective Examples and Comparative Examples, ink introducibility and print quality are evaluated in accordance with the methods described below.

### (Evaluation of Ink Introducibility)

Ink cartridges filled with each aqueous ink prepared in the respective Examples and Comparative Examples are mounted on an inkjet multifunction device MFC-J904 from Brother Industries, Ltd., and maintenance operations are performed to remove bubbles generated in the ink flow path system. Immediately after the completion of the maintenance operation, a nozzle check pattern is printed on plain paper. Based on the nozzle check pattern recorded on the plain paper, the ratio of nozzles that discharged ink normally during initial discharge relative to all nozzles is calculated, and ink introducibility is evaluated according to the following criteria. The evaluation results are shown in Tables 1 and 2.
A: Ink is ejected from all nozzles
B: Ink is ejected from 95% or more of the nozzles
C: Ink is ejected from less than 95% of the nozzles

### (Print Quality)

Ink cartridges filled with each aqueous ink prepared in the respective Examples and Comparative Examples are mounted on an inkjet multifunction device MFC-J904 from Brother Industries, Ltd., and a one-dot line is printed on plain paper at a resolution of 600 dpi × 300 dpi. The width of the printed line is measured using the handheld image evaluation system PIAS^{®}-II from Quality Engineering Associates (QEA), and print quality is evaluated according to the following criteria. The numerical value in parentheses in the evaluation results indicates the line width (µm) of the one-dot line in each Example.
A: Line width is 70.0 µm or greater
B: Line width is 62.5 µm or greater and less than 70.0 µm
C: Line width is less than 62.5 µm

As shown in Tables 1 and 2, in Examples 1 to 12, both ink introducibility and print quality exhibit favorable results.

In contrast, in Comparative Example 1, the evaluation of ink introducibility is favorable, but the print quality is found to be low. In Comparative Example 1, saponin, which is a direct extract from plants, is used as the surfactant instead of the biosurfactant used in the Examples. Saponin functions as a surfactant and is therefore considered to have exhibited sufficient surfactant action during the introduction of aqueous ink into the ink flow path system. However, the surfactant action of saponin is lower than that of the biosurfactant. As a result, the surface tension of the aqueous ink is not sufficiently reduced, and adequate wettability on the medium is not achieved, which is considered to have led to the low evaluation of print quality.

Further, in Comparative Example 2, lecithin, which is a direct extract from plants, is used as the surfactant instead of the biosurfactant used in the Examples. Since lecithin is poorly soluble in water, it is less likely to exhibit surfactant action in aqueous ink. As a result, the surface tension of the aqueous ink is not reduced, and the ink introducibility into the ink flow path system is considered to be decreased. In Comparative Example 2, since enough ink is not introduced into the ink flow path system and printing on the medium is not sufficient for evaluation, print quality is not evaluated.

Furthermore, in Comparative Example 3, no surfactant is contained. As a result, the surface tension of the aqueous ink is high, and the ink introducibility into the ink flow path system is low. In Comparative Example 3, since enough ink is not introduced into the ink flow path system and printing on the medium is not sufficient for evaluation, print quality is not evaluated.

Next, each Example will be compared. Examples 1 to 6 contain spiculisporic acid as the surfactant and share a common composition except for the differing amount of spiculisporic acid. As indicated by the evaluation results of Examples 1 to 6, when the amount of spiculisporic acid is in the range of 0.05 mass% to 3.00 mass%, the evaluations of ink introducibility and print quality are rated as "A" or "B". Examples 7 to 12 contain rhamnolipid as the surfactant and share a common composition except for the differing amount of rhamnolipid. As indicated by the evaluation results of Examples 7 to 12, when the amount of rhamnolipid is in the range of 0.02 mass% to 1.50 mass%, the evaluations of ink introducibility and print quality are rated as "A" or "B". Therefore, when a biosurfactant is contained as the surfactant, even a small amount of biosurfactant improves ink introducibility and print quality. That is, an extremely small amount of the biosurfactant causes sufficient surfactant action. On the other hand, when the amount of biosurfactant is relatively large, ink introducibility may decrease. This is considered to be due to the biosurfactant forming micelles in the aqueous ink. The aqueous ink flows through a narrow channel into the inkjet head. Accordingly, when the biosurfactant forms micelles in the aqueous ink, the micelles may locally decrease the fluidity of the aqueous ink. As a result, ink introducibility is considered to have decreased.

It should be noted that, in order to form an image, the aqueous ink is required to have a certain high degree of wettability with respect to the medium. That is, in the evaluation of print quality, it is preferable that the line width of a one-dot line is larger. On the other hand, if the wettability with respect to the medium is excessively high, the fluidity of the aqueous ink increases, which may cause image bleeding. However, in such cases, image bleeding can be suppressed by adjusting to decrease the liquid application amount of the aqueous ink. In other words, the liquid application amount of the aqueous ink can be appropriately adjusted according to the wettability with respect to the medium. Therefore, in the evaluation of print quality, it is preferable that the line width of a one-dot line is larger than a predetermined value. In the aqueous inks of each Example, the line width of a one-dot line is within a preferable range, and thus excellent print quality is achieved.

The specific examples of the present disclosure have been described in detail above; however, these are merely illustrative and are not intended to limit the scope of the claims. The technical scope described in the claims encompasses various modifications and alterations of the above-exemplified embodiments.

Furthermore, the technical elements described in this specification or the drawings may exhibit technical utility either individually or in various combinations, and are not limited to the combinations described in the claims at the time of filing. Additionally, the technologies exemplified in this specification or the drawings may achieve multiple objectives simultaneously, and the achievement of any one of these objectives alone is technically useful.

Even if a claim is dependent only on certain claims in the claims at the time of filing of this patent application, the claim is not limited to being dependent only on those specific claims. To the extent that there is no technical inconsistency, each claim may be dependent on other claims not originally indicated as dependent claims at the time of filing. That is, the technologies of the respective claims can be variously combined as follows.

(Item 1) An aqueous ink for inkjet recording comprising a plant-derived colorant, a plant-derived water-soluble organic solvent, a plant-derived surfactant, and water, wherein the plant-derived surfactant is a biosurfactant.

(Item 2) The aqueous ink for inkjet recording according to Item 1, wherein the biosurfactant is a fatty acid type biosurfactant.

(Item 3) The aqueous ink for inkjet recording according to Item 2, wherein the fatty acid type biosurfactant is spiculisporic acid.

(Item 4) The aqueous ink for inkjet recording according to any one of Items 1 to 3, wherein the biosurfactant is a sugar type biosurfactant.

(Item 5) The aqueous ink for inkjet recording according to Item 4, wherein the sugar type biosurfactant is rhamnolipid.

(Item 6) The aqueous ink for inkjet recording according to any one of Items 1 to 5, wherein an amount of the biosurfactant relative to the total amount of the aqueous ink is 0.02 mass% or more and 3.00 mass% or less.

(Item 7) The aqueous ink for inkjet recording according to Item 3, wherein an amount of the spiculisporic acid relative to the total amount of the aqueous ink is 0.05 mass% or more and 3.00 mass% or less.

(Item 8) The aqueous ink for inkjet recording according to Item 7, wherein an amount of the spiculisporic acid relative to the total amount of the aqueous ink is 0.05 mass% or more and 2.50 mass% or less.

(Item 9) The aqueous ink for inkjet recording according to Item 8, wherein an amount of the spiculisporic acid relative to the total amount of the aqueous ink is 0.10 mass% or more and 2.50 mass% or less.

(Item 10) The aqueous ink for inkjet recording according to Item 5, wherein an amount of the rhamnolipid relative to the total amount of the aqueous ink is 0.02 mass% or more and 1.50 mass% or less.

(Item 11) The aqueous ink for inkjet recording according to Item 10, wherein an amount of the rhamnolipid relative to the total amount of the aqueous ink is 0.02 mass% or more and 1.00 mass% or less.

(Item 12) The aqueous ink for inkjet recording according to Item 11, wherein an amount of the rhamnolipid relative to the total amount of the aqueous ink is 0.20 mass% or more and 1.00 mass% or less.

(Item 13) An inkjet recording apparatus comprising an ink reservoir, an ink ejection section, and an aqueous ink stored in the ink reservoir, wherein the aqueous ink comprising a plant-derived colorant, a plant-derived water-soluble organic solvent, a plant-derived surfactant, and water, wherein the plant-derived surfactant is a biosurfactant.

## Claims

1. An aqueous ink for inkjet recording, comprising:
a plant-derived colorant;
a plant-derived water-soluble organic solvent;
a plant-derived surfactant; and
water,
wherein the plant-derived surfactant is a biosurfactant.

2. The aqueous ink for inkjet recording according to claim 1, wherein the biosurfactant is a fatty acid type biosurfactant.

3. The aqueous ink for inkjet recording according to claim 2, wherein the fatty acid type biosurfactant is spiculisporic acid.

4. The aqueous ink for inkjet recording according to claim 1, wherein the biosurfactant is a sugar type biosurfactant.

5. The aqueous ink for inkjet recording according to claim 4, wherein the sugar type biosurfactant is rhamnolipid.

6. The aqueous ink for inkjet recording according to claim 1, wherein an amount of the biosurfactant relative to the total amount of the aqueous ink is 0.02 mass% or more and 3.00 mass% or less.

7. The aqueous ink for inkjet recording according to claim 3, wherein an amount of the spiculisporic acid relative to the total amount of the aqueous ink is 0.05 mass% or more and 3.00 mass% or less.

8. The aqueous ink for inkjet recording according to claim 7, wherein an amount of the spiculisporic acid relative to the total amount of the aqueous ink is 0.05 mass% or more and 2.50 mass% or less.

9. The aqueous ink for inkjet recording according to claim 8, wherein an amount of the spiculisporic acid relative to the total amount of the aqueous ink is 0.10 mass% or more and 2.50 mass% or less.

10. The aqueous ink for inkjet recording according to claim 5, wherein an amount of the rhamnolipid relative to the total amount of the aqueous ink is 0.02 mass% or more and 1.50 mass% or less.

11. The aqueous ink for inkjet recording according to claim 10, wherein an amount of the rhamnolipid relative to the total amount of the aqueous ink is 0.02 mass% or more and 1.00 mass% or less.

12. The aqueous ink for inkjet recording according to claim 11, wherein an amount of the rhamnolipid relative to the total amount of the aqueous ink is 0.20 mass% or more and 1.00 mass% or less.

13. An inkjet recording device (10) comprising:
an ink reservoir (2);
an ink ejection unit (3); and
an aqueous ink stored in the ink reservoir (2),
wherein the aqueous ink comprises:
a plant-derived colorant;
a plant-derived water-soluble organic solvent;
a plant-derived surfactant; and
water,
wherein the plant-derived surfactant is a biosurfactant.
